# EUROPEAN PATENT APPLICATION

(11) **EP 1 746 073 A1**
(43) Date of publication of application: **24.01.2007**
(21) Application number: 05106665.2
(22) Date of filing: 20.07.2005
(51) Int. Cl.: C01F 11/18, B01J 19/00

(54) **Process for making a solid compound by precipitation, suspensions of solid in liquids and solids obtained by the process and their use as additives**

(71) Applicant: SOLVAY (Société Anonyme), 1050 Bruxelles (BE)
(72) Inventor: LEFEVRE, Benoît, 13200, ARLES (FR); SY, Didier, 13129, SALIN DE GIRAUD (FR); GUITON, Christophe, 13129, SALIN DE GIRAUD (FR); LACROIX, Marc, 1348, LOUVAIN-LA-NEUVE (BE)
(74) Representative: Vande Gucht, Anne

(57) **Abstract**

Process for making a solid compound by precipitation, using a high intensity mixing reactor and comprising the steps of
(A) introducing a first fluid material containing a first reactant and a second fluid material containing a second reactant into said reactor, in order to obtain a mixed fluid, in order to cause the first reactant to react with the second reactant to form a solid compound by precipitation in the mixed fluid;
(B) withdrawing the mixed fluid containing the precipitated solid obtained in step (A) from the reactor, and;
(C) optionally separating the precipitated solid compound from at least one fraction of the mixed fluid.

## Description

This invention relates to a process for making a solid compound by precipitation, to suspensions of solid compounds in liquids and to isolated solid compounds, obtained by the process. This invention also relates to the use of such suspensions and such solid compounds as additives.

Precipitated calcium carbonate (PCC) can be produced by several methods but the major part is produced today via the carbonation process. According to this process, carbon dioxide is blown into a suspension of calcium hydroxide (milk-of-lime) and the resulting calcium carbonate is recovered. However since the operation is in most cases carried out batchwise, the process has several drawbacks. It has a low efficiency due to time consuming operations of loading and discharging the carbonating vessel. No steady-state can be reached during carbonation leading to poor control of PCC particles characteristics such as their crystallographic phase, their size, their morphology, etc. Continuous processes have been proposed in order to overcome such drawbacks. Document US 4,133,894 for instance describes a continuous process for the preparation of precipitated calcium carbonate in three consecutive reactors where a calcium hydroxide suspension and a carbon dioxide containing gas, flow countercurrently. Such an arrangement is however complex and difficult to monitor. It suffers from poor control of residence time of reactants in the reactors and subsequent shift of the PCC particles characteristics could be observed with time on stream. Moreover, deposits of PCC particles may occur on the reactor walls with time on stream (crusting) due to the relatively low agitation present in such reactors. Therefore, there is still a need for carrying out the carbonation reaction in a reactor where the residence time and hence the PCC particles characteristics could be controlled efficiently, and where the crusting on the reactor walls could be lowered.

The invention then relates to a process for making a solid compound by precipitation, using a reactor comprised of a tank defining a mixing chamber having an inner wall which is generally symmetrical about a central axis, of an agitator comprising a cylindrical central portion extending in said mixing chamber along said axis and at least one blade having a twisted orientation on said central portion, of a series of first baffles extending along the inner wall generally parallel to said axis and of a series of second baffles extending along the inner wall generally transverse to said axis; and comprising the steps of
(A) introducing a first fluid material containing a first reactant and a second fluid material containing a second reactant into said reactor, in order to obtain a mixed fluid, rotating the agitator, disrupting the mixed fluid flow generally circumferentially in said mixing chamber with first baffles and disrupting mixed fluid flow generally axially in said mixing chamber with second baffles, in order to cause the first reactant to react with the second reactant to form a solid compound by precipitation in the mixed fluid;
(B) withdrawing the mixed fluid containing the precipitated solid obtained in step (A) from the reactor, and ;
(C) optionally separating the precipitated solid compound from at least one fraction of the mixed fluid.

The fluid materials and the mixed fluid in the process according to the invention may be of any type and one, two or three phase mixtures.

The process can be carried out in a continuous or discontinuous mode. For example, each of the fluid materials can be introduced in the reactor continuously or intermittently. The mixed fluid containing the precipitated solid can be withdrawn from the reactor continuously or intermittently. It is preferred to introduce both fluid materials and to withdraw the mixed fluid continuously.

In the process according to the invention, the temperature of each fluid material before introduction in the reactor can be varied (independently ?) over a wide range. It is generally higher than or equal to -50 °C, preferably higher than or equal to 0 °C, more preferably higher than or equal to 5 °C and most preferably higher than or equal to 10 °C. That temperature is usually lower than or equal to 100 °C, advantageously lower than or equal to 80 °C, more advantageously lower than or equal to 60 °C and most advantageously lower than or equal to 25 °C.

The reactant content of each fluid materials before the introduction in the reactor may vary (independently ?) over a wide range. It is usually higher than or equal to 1 g/L of first fluid material, preferably higher than or equal to 5 g/L, more preferably higher than or equal to 25 g/L and most preferably higher than or equal to 50 g/L. That content is generally lower than or equal to 300 g/L of first fluid material, advantageously lower than or equal to 200 g/L, more advantageously lower than or equal to 150 g/L and most advantageously lower than or equal to 100 g/L.

Each fluid material can contain at least one additive different from the reactant.

The content of the additive in each fluid material can be changed over a wide range. It is usually higher than or equal to 0.01 % wt of the weight of the precipitated solid compound, preferably higher than or equal to 0.1 % wt, more preferably higher than or equal to 0.5 % wt and most preferably higher than or equal to 1 % vol. That content is generally lower than or equal to 20 % wt, advantageously lower than or equal to 15 % wt, more advantageously lower than or equal to 10 % wt and most advantageously lower than or equal to 5 % wt. The weight of the precipitated solid compound is the weight of the reactant in the fluid material calculated on the basis of the chemical formula of the precipitated solid compound.

At least one of the fluid materials can be a gaseous mixture.

The pressure of the gaseous mixture before entering the reactor is usually higher than or equal to 1 bar (absolute), preferably higher than or equal to 2 bar, more preferably higher than or equal to 3 bar and most preferably higher than or equal to 4 bar. That pressure is generally lower than or equal to 50 bar, advantageously lower than or equal to 20 bar, more advantageously lower than or equal to 15 bar and most advantageously lower than or equal to 10 bar.

The reactant content of the gaseous mixture is usually higher than or equal to 1 % vol of the gas, preferably higher than or equal to 5 % vol, more preferably higher than or equal to 10 % vol and most preferably higher than or equal to 20 % vol. That content is generally lower than or equal to 100 % vol, advantageously lower than or equal to 60 % vol, more advantageously lower than or equal to 40 % vol and most advantageously lower than or equal to 30 % vol. The balance can be made of any other gas different from the reactant.

It is preferred that the first fluid material is a one phase liquid or a two phase solid/liquid mixture and that the second fluid material is a gaseous mixture.

The speed of rotation of the agitator of the reactor used in the process according to the invention is generally higher than or equal to 200 rpm, preferably higher than or equal to 500 rpm, more preferably higher than or equal to 1 200 rpm and most preferably higher than or equal to 2 500 rpm. That speed of rotation is usually lower than or equal to 5 000 rpm, advantageously lower than or equal to 4 600 rpm, more advantageously lower than or equal to 4 200 rpm and most advantageously lower than or equal to 3 800 rpm.

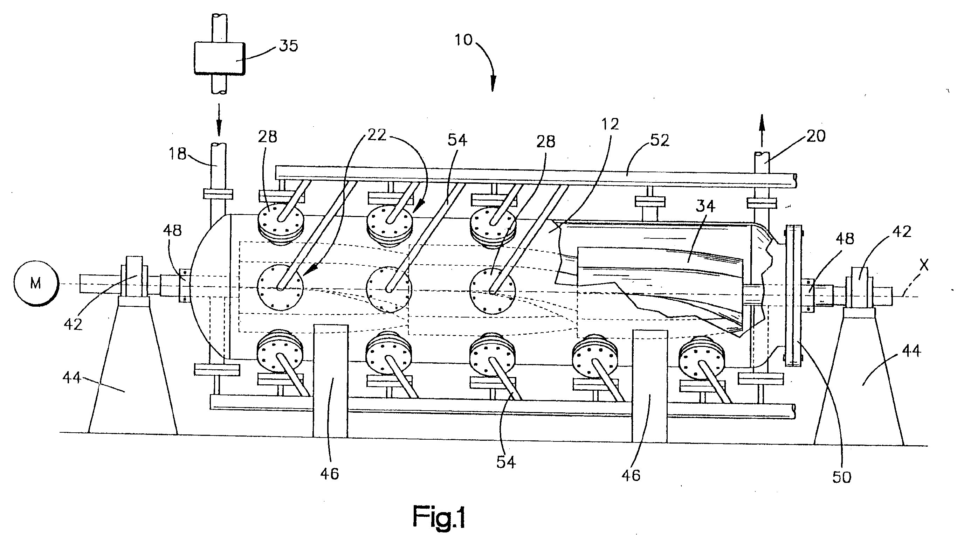

The agitator can be rotated clockwise or counter-clockwise. It is preferred to rotate it clockwise. Clockwise is to be understood when looking the reactor of Figure 1 from left to right or, as far as fluid motion is concerned, clockwise is to be understood as facilitating the fluid flow towards the outlet of the reactor.

The residence time of the first fluid material in the mixing chamber is generally higher than or equal to 0.001 s. That residence time is usually lower than or equal to 10 s. The residence time is defined as the volume of the first fluid in the mixing chamber divided by the flow rate of the first fluid material times 100.

Even for such low residence times, the yield of the precipitation reaction is high.

The yield of the precipitation reaction is usually higher than or equal to 70 %, preferably higher than or equal to 90 %, more preferably higher than or equal to 95 % and most preferably higher than or equal to 97 %.

The yield is defined as the ratio between the amount of precipitated solid compound after separation and the theoretical amount based on the reactant which was introduced in sub-stoichiometric amount in the reactor.

The temperature of the mixed fluid is generally higher than or equal to the temperature of the first and second fluid materials. Without being bound by any theory, it is believed that the temperature increase is due to the mechanical energy brought in by the agitation and to the chemical energy brought in by the reaction of precipitation, the first one being preponderant.

Optionally, the solid compound obtained by precipitation can be separated from at least one fraction of the mixed fluid. The separation can be carried out in one or more steps. For instance, if the first fluid is a liquid or a suspension of a solid in a liquid and the second fluid is a gas, the gas can be separated in a first step leaving a suspension of the precipitated solid in a liquid and the precipitated solid can be separated from the resulting suspension in a second step. Any separation methods for separating liquids, gases and solids can be used.

The invention then relates also to a suspension of the precipitated solid in the mixed fluid or in a fraction of the mixed fluid obtained by the process according to the invention and, to a precipitated solid.

The precipitated solid compound can be any organic or inorganic solid. Inorganic solids are preferred. Alkaline and alkaline-earth metal carbonates and sulfates are more preferred. Alkaline-earth metal carbonates are yet more preferred and calcium carbonate is the most preferred inorganic solid.

The first fluid material can be of any type, one, two or three phase mixtures.

When the precipitated solid compound prepared by to the process according to the invention is calcium carbonate, the first fluid material contains at least one calcium compound (first reactant) and the second fluid material contains at least one carbonate compound or one carbonate precursor compound (second reactant).

The first fluid material may be a solution or a suspension of a calcium compound in a solvent. The solvent may be organic or inorganic. Inorganic solvents are preferred and water is more preferred. The calcium compound can be a calcium salt, calcium oxide or calcium hydroxide. It is preferred that the first fluid material which contains at least one calcium compound is an aqueous suspension of calcium hydroxide (milk of lime).

The second fluid material may be a solution or a suspension of a carbonate compound or of a carbonate precursor compound in a solvent, or a gas containing the carbonate precursor compound. The solvent may be organic or inorganic. Inorganic solvents are preferred and water is more preferred. The carbonate compound can be any metal or non-metal carbonate or bicarbonate and the carbonate precursor compound can be carbon dioxide. It is preferred that the second fluid material which contains at least one carbonate compound is an aqueous solution or suspension of a metal or non-metal carbonate, such metal or non-metal being susceptible to be displaced by calcium. It is more preferred that the carbonate compound is sodium carbonate. The gas containing the carbonate precursor compound is preferably a carbon dioxide containing gas.

A process where the first fluid material is an aqueous suspension of calcium hydroxide (milk of lime) and the second fluid material is a carbon dioxide containing gas is particularly well suited.

It has surprisingly be found that when preparing precipitated calcium carbonate according to the process of the invention, PCC particles with controlled characteristics can be produced during several hours with no significant crusting occurrence able to perturbate the established steady production conditions.

It has also surprisingly be found that the effect of the conditions of the process according to the invention on the PCC characteristics is not necessarily the same as the effect observed for a batch process.

The calcium hydroxide suspension (milk of lime) used in the process according to the invention is usually obtained by calcining a calcium carbonate containing compound, for instance limestone or oyster shells, in a kiln to obtain carbon dioxide and quicklime. The quicklime is then mixed with water to produce a milk-of-lime. Any type of limestone can be used to produce quicklime, for example chalk and marble.

The calcium oxide content of the quick lime is usually higher than or equal to 50 % wt of the quick lime. The calcium oxide content is generally lower than or equal to 100 % wt of the quick lime.

In the process according to the invention, a higher temperature of the milk of lime generally favors lower mean PCC primary particles size (dp) and lower mean PCC aggregate size (D₅₀). The effect of the temperature on the mean PCC primary particles size is the reverse of which is observed for the current batch carbonation process. Aggregates are defined as association of primary particles. Primary particles are defined as the smallest individual crystallites.

In the process according to the invention, all other process conditions being unchanged, a lower content of calcium hydroxide (Ca(OH)₂) in the milk of lime leads to a higher content of the aragonite crystallographic phase of PCC with respect to what is observed at low Ca(OH)₂ contents.

The suspension of calcium hydroxide can contain additives. These additives can be selected from inorganic acids, carboxylic acids, polyacrylic acids, sulfosuccinic acids and their salts, from ammonium, alkaline and alkaline-earth metal salts, oxides or hydroxides, from polyalkene glycols, smectite clays and from mixtures thereof. Citric acid, ethylene diamine tetraacetic acid, sodium polyacrylate, potassium dihydrogenophosphate, sodium sulfosuccinate, ammonium chloride, ammonium hydroxide, barium, lithium and magnesium hydroxides and carbonates, copolymers based on ethylene oxide and propylene oxide, laponite and mixtures thereof are preferred.

The nature of the additive can influence the characteristics of the obtained PCC. Ammonium chloride can inhibit the formation of aragonite. Ammonium chloride and ammonium hydroxide can lead to a reduction of the mean PCC primary particle size and of the mean PCC aggregates size. Citric acid leads to an increase of the specific surface area and to spindle shape aggregates habit. This effect on the particle shape is not necessarily observed for the batchwise process.

The carbon dioxide-containing gas used in the process according to the invention can be discharged from a calcination furnace for obtaining the calcium oxide from limestone, from gases from power plants or from liquid CO₂ containers for instance. It is preferred to use carbon dioxide discharged from a calcination furnace for obtaining the calcium oxide from limestone or carbon dioxide from liquid CO₂ containers.

When the carbon dioxide-containing gas is discharge from calcinations furnace or from power plants, its carbon dioxide content is usually higher than or equal to 1 % vol of the gas, preferably higher than or equal to 2 % vol, more preferably higher than or equal to 5 % vol and most preferably higher than or equal to 10 % vol. That content is generally lower than or equal to 50 % vol, advantageously lower than or equal to 35 % vol, more advantageously lower than or equal to 33 % vol and most advantageously lower than or equal to 30 % vol. The balance can be made of any other gases like oxygen, nitrogen, ammonia, etc.

When the carbon dioxide-containing gas is discharged from liquid CO₂ containers, its carbon dioxide content is usually higher than or equal to 1 % vol of the gas, preferably higher than or equal to 15 % vol, more preferably higher than or equal to 30 % vol and most preferably higher than or equal to 50 % vol.

In the process according to the invention, a higher pressure of the carbon dioxide containing gas usually favors higher mean PCC primary particle size. A higher pressure also generally favors PCC particles with well defined habit. By well defined habit, one intends to denote primary particles exhibiting well defined corners, edges and faces as opposed to rounded particles, as detected by Electron Microscopy analysis.

The concentration of the carbon dioxide-containing gas in the milk of lime (as dissolved CO₂ and/or HCO₃⁻ ions and/or CO₃⁻ ions) has an important impact on the crystallographic phase and on the crystal habit of the PCC particles. A higher concentration is usually obtained by decreasing the temperature of the milk of lime, by increasing the pressure and the carbon dioxide content of the carbon dioxide containing gas. Higher concentrations usually lead to the production of an increased amount of aragonite together with calcite and to spindle-shape particles together with rhomboedral particles. This effect is the reverse to what is observed for the batchwise process.

Low and high speed values of the agitator favor low mean PCC primary particles average size and low mean PCC aggregates average size. By low speed values, one intends to denote values lower than or equal to 2 600 rpm. By high speed values, one intends to denote values higher than or equal to 3 750 rpm.

The separation of the residual carbon dioxide-containing gas from the suspension of precipitated calcium carbonate can be carried in any type of gas/liquid separator.

The yield of the carbonation reaction is usually higher than or equal to 80 %, preferably higher than or equal to 90 %, more preferably higher than or equal to 95 % and most preferably higher than or equal to 98 %. The yield is related to the extent of the carbonation of the milk of lime. The yield can be easily obtained from the Ca(OH)₂ initial and fmal content of the milk of lime. The initial content relates to the milk of lime before entering the reactor. The fmal content relates to the milk of lime after carbonation and separation of residual carbon dioxide-containing gas suspension. Those contents can easily be obtained by acid-base titrations.

The difference of temperature between the temperature of the suspension in the gas/liquid separator and the temperature of the milk of lime before entering the reactor is usually higher than or equal to 10 °C, preferably higher than or equal to 15 °C, more preferably higher than or equal to 20 °C and most preferably higher than or equal to 25 °C. That temperature difference is generally lower than or equal to 150 °C, advantageously lower than or equal to 100 °C, more advantageously lower than or equal to 75 °C and most advantageously lower than or equal to 50 °C.

The pH of the suspension in the gas/liquid separator can be continuously monitored. The pH value is related to the extent of the carbonation of the milk of lime and to the dissolved carbonate species in the liquid (as dissolved CO₂ and/or HCO₃⁻ ions and/or CO₃⁻ ions). That pH value is usually lower than or equal to 13, preferably lower than or equal to 12, more preferably lower than or equal to 10 and most preferably lower than or equal to 9. That value is generally higher than or equal to 3, advantageously higher than or equal to 4, more advantageously higher than or equal to 5 and most advantageously higher than or equal to 6. The pH of the suspension in the gas/liquid separator can be adjusted by varying any reaction condition i.e. : gas pressure, composition and flow rate, milk of lime composition, temperature and flow rate, rotation speed of the agitator. It is preferred to adjust the pH by controlling the flow rate of the milk of lime.

In a preferred first embodiment according to the invention, the milk of lime and the carbon dioxide-containing gas are fed co-currently. Both feeding can be in one stage or can be multi-stage. One stage feeding for both streams is preferred.

In a second embodiment according to the invention, the milk of lime and the carbon dioxide-containing gas are fed counter-currently. Both feeding can be in one stage or can be multi-stage. One stage feeding for both streams is preferred.

In a preferred first variant according to the invention, the carbon dioxide-containing gas is fed to the reactor at a given pressure and a given flow rate. The rotation of the agitator is started. When the selected speed of rotation is reached, the milk of lime is introduced in the reactor. The pH of the suspension in the gas/liquid separator is measured and the flow rate of the milk of lime is adjusted to reach the desired pH value.

In a second variant according to the invention, the rotation of the multi-bladed agitator is started. When the selected speed of rotation is reached, the carbon dioxide-containing gas is fed to the reactor at a given pressure and a given flow rate. Then, the milk of lime is introduced in the reactor at a given temperature and a given flow rate. The pH of the suspension in the gas/liquid separator is measured and the flow rate of the milk of lime is adjusted to reach the desired pH value.

In a third variant according to the invention, the milk of lime is introduced in the reactor at a given temperature and a given flow rate. The rotation of the multi-bladed agitator is started. When the selected speed of rotation is reached, the carbon dioxide-containing gas is fed to the reactor at a given pressure and a given flow rate. The pH of the suspension in the gas/liquid separator is measured and the flow rate of the milk of lime is adjusted to reach the desired pH value.

In a fourth variant according to the invention, the rotation of the multi-bladed agitator is started. When the selected speed of rotation is reached, the milk of lime is introduced in the reactor at a given temperature and a given flow rate. Then, the carbon dioxide-containing gas is fed to the reactor at a given pressure and a given flow rate. The pH of the suspension in the gas/liquid separator is measured and the flow rate of the milk of lime is adjusted to reach the desired pH value.

In the third and fourth variants, it is preferred to introduce an inert gas simultaneously with the milk of lime. By inert gas, one intends to denote any non-containing carbon dioxide gas, such as nitrogen, air, etc.

In the case when the first fluid material is a solution or a suspension of a calcium compound in a solvent and the second fluid material is a solution or a suspension of a carbonate compound in a solvent, it is preferred to introduce an inert gas before starting the rotation of the agitator whatever the sequence of introduction of the two fluids materials in the reactor.

The reactor used in the process according to the invention is similar in its principle to the one described in WO 99/16539.

The mixing assembly used in the process according to the invention comprises a preferably cylindrical mixing chamber having an inner wall which is generally symmetrical about a central (longitudinal) axis. At least one first fluid inlet introduces first fluid material into the mixing chamber. At least one second fluid inlet introduces second fluid material into the mixing chamber. At least one outlet enables fluid to leave the mixing chamber. First or axial baffles extend along the inner wall generally parallel to the axis for disrupting fluid flow generally circumferentially in the mixing chamber. Second or circumferential baffles extend generally transverse to the axis for disrupting fluid flow in a generally axial direction in the mixing chamber. The second baffles are constructed and arranged to segment the mixing chamber axially. A rotatable agitator comprises a cylindrical central portion extending in the mixing chamber along the axis and at least one blade having a twisted orientation on the central portion. The relative construction and arrangement among the first baffles, the second baffles and the agitator enable residence time of fluid in the reactor to be selectively adjusted.

In particular, the circumferential baffles partition the mixing chamber into at least two axial segments. The axial baffles in one of the segments are offset from the axial baffles in an adjacent one of the segments as viewed in a direction of the axis. A generally annular space is located radially between each blade and the axial baffles. A size of the space is selected to produce the particular residence time of liquid material in the mixing chamber. The space ranges from about 0.01 to about 0.1 times an inside diameter of the mixing chamber and, in particular, from about 0.03 to about 0.11 times an inside diameter of the mixing chamber. A ratio of a height of each of the axial baffles to an inside diameter of the mixing chamber ranges from about 0.001 to about 0.40 and, in particular, from about 0.01 to about 0.20. Each blade has a pitch such that there is a generally constant gap between an edge of the blade and edges of the axial baffles, along an entire length of the blade.

Also, insert assemblies may each be disposed at a location of a second fluid inlet adjacent the mixing chamber wall for admitting the second fluid into the reactor at a selected flow rate. A variable speed drive may be used that can rotate the agitator in both a clockwise and counterclockwise direction.

A preferred embodiment of the mixing assembly used in the process according to the invention comprises the generally cylindrical mixing chamber having the inner wall which is generally symmetrical about the central axis, the first and second fluid inlets, and outlet. Also included are the axial and circumferential baffles. The circumferential baffles are constructed and arranged to segment the mixing chamber axially. The insert assemblies are each disposed at a location of a second fluid inlet adjacent the mixing chamber wall. The rotatable agitator comprises a central cylindrical hub portion extending in the mixing chamber along the axis and at least one blade having a twisted orientation on the hub portion. The relative construction and arrangement among the first baffles, the second baffles and the agitator enable residence time of fluid in the reactor to be selectively adjusted.

Another preferred embodiment of the mixing assembly used in the process according to the present invention comprises the generally cylindrical mixing chamber having the inner wall which is generally symmetrical about the central axis, the first and second fluid inlets, and outlet. Also included are the axial and circumferential baffles. The circumferential baffles are constructed and arranged to segment the mixing chamber axially. The insert assemblies are each disposed at a location of a second fluid inlet adjacent the mixing chamber wall. The rotatable agitator comprises a central cylindrical hub portion extending in the mixing chamber along the axis and at least one blade having a twisted orientation on the hub portion. Each blade has a pitch such that a generally constant gap is maintained between an edge of the blade and edges of the axial baffles along an entire length of the blade. The generally annular space is located radially between each blade and the axial baffles. A size of the space is selected to produce a particular residence time of liquid material in the mixing chamber. Also included is the variable speed drive mechanism capable of both clockwise and counterclockwise rotation of the agitator. In particular, the assembly may include a device for pressurizing the liquid. The agitator can produce substantially superatmospheric pressure in the mixing chamber.

The reactor mixer used in the process according to the present invention enables the efficient dispersion and dissolution of different materials into one another. In particular, the reactor mixer enables secondary gas to be inlet into the insert assemblies for reacting with primary liquid material. These advantages are obtained by the design of the axial and circumferential baffles, insert assemblies and agitator.

The design of the agitator blades and axial and circumferential baffles offer numerous advantages and serve a plurality of purposes. The baffle systems disrupt axial and circumferential fluid flow and enable efficient mixing. A constant gap between the blades and the baffles is maintained upon passing of the blades.

Only a small section of any blade is opposite any axial baffle at any one time, which lessens mixing power consumption. The twisted blade design on the central cylindrical portion of the agitator enables the blades to utilize a sweeping action past the inward edges of the axial baffles. Since the blades are twisted, only a small portion of a blade is advantageously opposite an axial baffle at one time by the predetermined space. The sweeping of the blades past the baffles causes a unique mixing action and further lessens mixing power consumption. Generally at least one point on at least one blade edge is separated from at least one point on at least one axial baffle edge by the predetermined gap, which maximizes mixing efficiency. The flow in the mixing chamber can be increased or retarded based upon the speed and rotational direction of the agitator, in view of its unique twisted blade orientation.

Further advantages are that the circumferential baffles advantageously partition the mixing chamber into one or more axial segments. When liquid contacts the circumferential baffles it is directed inwardly toward the agitator, forming a liquid seal in each of the axial segments. The liquid seal prevents gas from traveling unobstructed along the shaft of the mixing device. The present mixer is well suited for conducting chemical reactions, such as carbonation of liquid suspensions, in view of its thorough liquid/gas mixing. The reactor is believed to enable the formation of three discrete fluid zones, an inner primarily gas zone around the agitator, a primarily liquid zone radially outward from the gas zone, and a reaction zone between the liquid and gas zone having a combination of liquid and gas. An interaction among the axial baffles, circumferential baffles and agitator enable residence time of fluid (e.g., liquid) in the mixing chamber to be selectively adjusted. In particular, a generally radial spacing between the agitator and axial baffles enables the reaction zone size, and thus the residence time of the liquid, to be selectively adjusted.

A method of mixing first and second fluid materials according to the invention comprises directing the first and second fluid materials into the mixing chamber. The agitator having at least one blade with the twisted orientation on the cylindrical central portion is rotated. Fluid flow is disrupted generally circumferentially in the mixing chamber with the axial baffles. Fluid flow is disrupted in a general direction of the axis with the circumferential baffles. The residence time of liquid material in the mixing chamber may be selectively adjusted based upon the relative construction and arrangement among the agitator, the axial baffles and the circumferential baffles. This may be accomplished by selecting a size of the annular space located radially between the blades and the axial baffles. Alternatively, the residence time of liquid material in the chamber may be increased or decreased as desired by rotating the agitator in a particular direction and at a particular speed.

Many additional features, advantages and a fuller understanding of the process according to the invention will be obtained from the accompanying drawings and the detailed description that follows.
Figure 1 is a side elevational view of a continuous dynamic mixing assembly used in the process in accordance with the present invention;
Figure 2 is vertical cross-sectional side view of the mixing assembly.
Figure 3 is a perspective view of one embodiment of an agitator constructed in accordance with the process according to the present invention.
Figure 4 is a cross-sectional view of the continuous dynamic mixing assembly of the process according to the present invention as approximately seen along the plane defined by lines 4-4 in Figure 2.
Figure 5 is a detailed cross-sectional view of a preferred embodiment of an insert assembly constructed in accordance with the process of the present invention.

The drawings included as a part of this specification are intended to be illustrative of preferred embodiments of the invention and should in no way be considered a limitation on the scope of the invention.

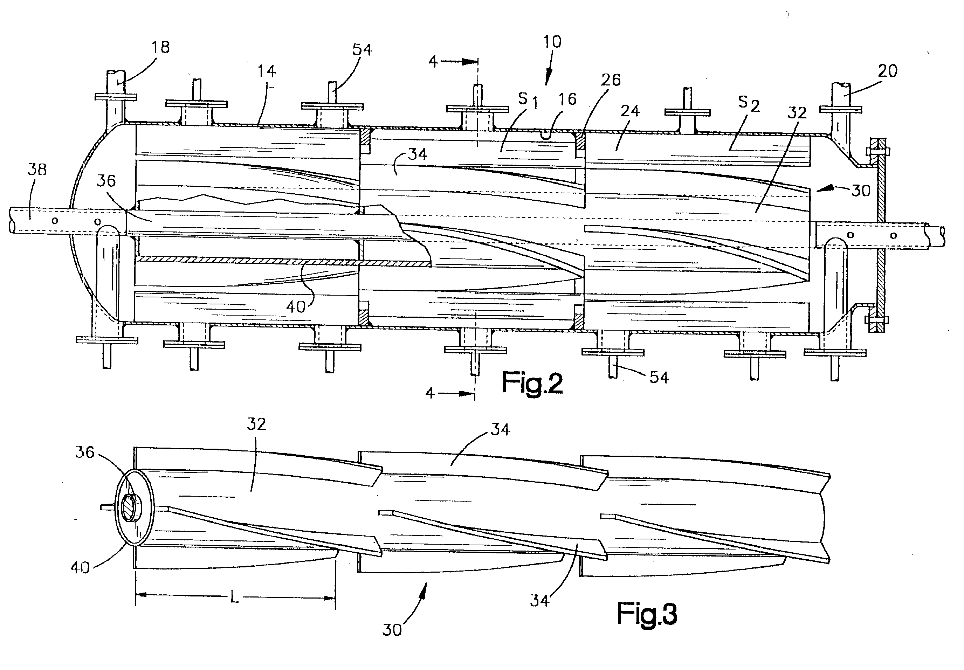

Referring now to the drawings, a reactor mixer assembly used in the process according to the present invention, which is for dispersion and dissolution of a secondary fluid material, preferably gas, into a primary fluid material, preferably liquid, is designated generally at 10. The mixing assembly comprises a generally cylindrical mixing vessel shell 12 having a wall 14 with an inner surface which forms a mixing chamber 16 that is generally symmetrical about a central axis X (Figures 1 and 2). At least one first fluid inlet 18 is connected to the shell for introducing the first fluid material into the mixing chamber and at least one outlet 20 is connected to the shell for discharging mixed fluid from the mixing chamber. Second fluid inlets 22 are disposed at a plurality of locations around the mixing chamber for introducing the second fluid material into the first fluid material. First baffles 24 extend axially along the inner wall generally parallel to the axis X. Second circumferential baffles 26 extend generally transverse to the axis X and are constructed and arranged to partition the mixing chamber axially into at least two segments (e.g., S1 and S2).

Insert assemblies 28 are disposed at each of the second fluid inlets 22 adjacent the mixing chamber wall. A rotatable agitator 30 comprises a cylindrical central portion 32 extending in the mixing chamber along the axis X and blades 34 that each have a twisted orientation on the central portion of the agitator.

The entry pipe 18 communicates with the mixing vessel shell in such a way that primary fluid from the entry pipe enters the mixing chamber 16. Entry pipe 18 is of sufficient size to admit the desired flow rate of primary fluid. The primary fluid may be pumped under pressure at a particular flow rate into the mixing chamber by a pump 35. After the mixing of the primary and secondary fluids, the mixed fluid leaves the mixing chamber via the exit pipe 20.

The agitator is driven by an external drive mechanism shown schematically at M and includes a shaft 36 that is coupled to a drive shaft 38 in a manner known to those skilled in the art. The agitator preferably includes a cylindrical hub portion 40 located concentrically around the shaft. The shaft 36 is supported by an appropriate bearing assembly 42 and pillow blocks 44. The mixing vessel shell is supported by suitable supports 46. The rotating shaft is sealed in the mixing vessel by suitable sealing devices 48. The sealing devices 48 are preferably dual-face rotating mechanical seals, although any suitable sealing mechanism may be used. Also, as shown in Figure 1, included in the assembly is a removable cover 50, over a maintenance access hole, which is used for shaft removal and other tasks.

Secondary fluid enters secondary fluid entry headers 52, only one of which is shown in Figure 1. From headers 52 the secondary fluid enters ports 54, which communicate with the insert assemblies 28. The headers 52 and the ports 54 may have other configurations. The secondary fluid flows into the mixing chamber through the insert assemblies 28. The insert assemblies 28 may be positioned at various locations around the mixing vessel shell 12.

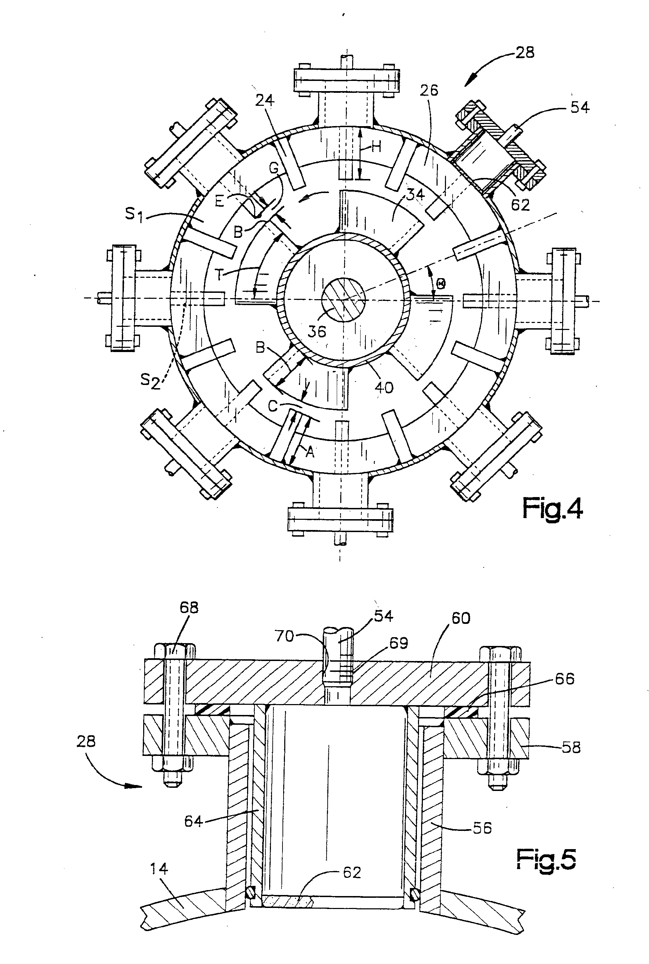

Referring to Figures 2 and 4, the circumferential baffles 26 have an annular shape. The circumferential baffles 26 communicate with the inside wall of the mixing vessel shell 12 and partition the reactor into two or more axial segments. This disrupts the bulk flow of fluid material in the axial direction, causing definite axial segmentation in the mixing chamber and substantially lessening the possibility of fluid flowing axially through the chamber undermixed. The circumferential baffles 26 temporarily force the bulk flow of fluid generally radially into the agitator blades to ensure complete mixing, and to form a unique liquid barrier through which gases cannot pass unobstructed.

The axial baffles 24 extend generally radially inwardly from the inner wall of the mixing vessel shell and provide for circumferential mixing within an individual axial segment. As best shown in Fig. 4, the axial baffles in one of the segments S1 are offset by an angle Θ from the axial baffles in an adjacent one of the segments S2 as viewed in a direction of the axis X. The angle Θ ranges from about 0 to about 180° and, in particular, not greater than about 90°. The axial baffles 24 extend substantially the entire length of each axial segment and preferably have a length less than an axial segment. In a given axial segment the axial baffles may be circumferentially spaced apart from each other by a central angle ranging from about 0 to about 180°. A ratio of a height H of each of the axial baffles 24 to an inside diameter of the mixing chamber ranges from about 0.001 to about 0.40 and, in particular, from about 0.01 to about 0.20. The mixing chamber is about 20 inches (50.8 cm) in diameter and about 6 feet (1.8 m) long, for example.

As shown in Figures 2 and 3, the hub portion of the multibladed agitator extends into the interior of the mixing chamber along the axis X. The shaft 36 extends through the vessel shell 12, the hub portion 40, the bearings 42 and the seals 48. Those skilled in the art will realize in view of this disclosure that the hub portion may be formed integrally with the shaft, formed separately from the shaft or otherwise omitted. For example, the blades may extend directly from a cylindrical shaft with no hub portion. The shaft 36 is preferably machined so that its outside diameter is less at the bearings 42 than along substantially the balance of the shaft.

Referring to Figure 3, the blades 34 are advantageously twisted as shown, although other degrees of twist are within the scope of the current invention.

It is preferred that the blades extend perpendicular to a tangent to the cylindrical portion as the blades twist, throughout the length of the blades. As shown in Figures 3 and 4, the blades have a pitch such that there is a generally constant gap G between each blade edge B and edges E of the axial baffles along the twist T for the entire length L of the blade. The blade twist T is important in that it lessens momentary power peaks that a blade parallel to the axis X would be prone to, and in that it creates a means to either propel the fluid from the mixing chamber or to retard the flow of fluid from the chamber. Thus, when the agitator is operated in accordance with the present invention, the twisted blades affect residence time of liquid material within the mixing chamber. The axial length L of each agitator blade (Figure 3) is preferably approximately equal to that of each axial baffle.

Referring to Figure 5, a preferred insert assembly 28 is shown, although other configurations may be used.

U.S. Patent No. 5,607,233 is incorporated herein by reference for specific features and effects of insert assemblies that may be suitable in the present invention.

An insert sleeve 56 is connected to the vessel shell 12 such as by welding. A shoulder 58 extends from the insert sleeve 56 to allow an end cap 60 of the insert assembly 28 to engage the sleeve 56. An insert 62 communicates with an insert wall 64 which in turn communicates with the end cap 60. The inserts 62 are generally coplanar with the inner surface of the wall 14 but may extend further into the mixing chamber. The inserts 62 can admit different fluids and may be formed from materials so as to adjust their porosity as desired or to have drilled openings of a particular size and number, enabling a wide variety of flow rates of the secondary fluid into the mixing chamber. The inserts 62 are preferably removable. A gasket 66 may be used in conjunction with fasteners 68 to seal the end cap against the insert sleeve 56. Secondary fluid is injected into the insert via the feed pipe 54 which has exterior threads 69 for engaging an interiorly threaded opening 70 in the end cap.

Referring to Figure 4, while not wanting to be bound by theory there are believed to be three fluid zones in the mixing chamber as viewed cross-sectionally in a direction of the axis X. The secondary fluid may be a gas, for example, an carbon dioxide-containing gas. The primary fluid may be, for example, liquid material, for example, a milk of lime suspension to be carbonated. Upon rotation of the agitator the centrifugal forces imparted by the blades on the fluid in the mixing chamber cause primarily liquid material to reside in an outer zone A located in an annulus radially between the inner surface of the wall 14 and the inner edges E of the axial baffles 24. Primarily gas is located in an innermost zone B located in an annulus that extends radially outwardly from the hub portion to the outer edges B of the blades. A discrete annular reaction zone C is located radially between the outer liquid material zone A and the inner gas zone B and contains a mixture of liquid and gas. The reaction zone C is located in the generally annular space G radially between the outermost edges of the blades and the edges of the axial baffles.

The size of the reaction zone C is selected to produce a particular residence time of liquid material in the mixing chamber. When the size of the reaction zone C is increased, the liquid material will have a longer residence time in the mixing chamber. When the size of the reaction zone C is decreased, the liquid material will have a shorter residence time in the mixing chamber.

The relative sizes of the zones A, B and C may be adjusted mechanically or operationally. The size of the space G may be determined when the reactor mixer is designed, by adjusting the size or height of the blades and the height of the axial baffles as well as the inside diameter of the mixing chamber. The space G preferably ranges from about 0.01 to about 0.1 times the inside diameter of the mixing chamber and, in particular, from about 0.03 to about 0.11 times the inside diameter of the mixing chamber.

The drive M is capable of variable speeds and can rotate the agitator clockwise or counterclockwise. While not wanting to be bound by theory, it is believed that the sizes of the zones are relatively constant or they may vary somewhat. Rotating the agitator assembly 40 clockwise, in view of the particular blade pitch and the view of Figures 3 and 4, propels the material out of the reactor, and is the most effective in reasonably gentle carbonation reactions. Clockwise rotation is also desirable when a rapid rate of mixing is required.

While not wanting to be bound by theory, the size of the reaction zone C may be affected by the directional rotation of the agitator. It is believed that clockwise rotation results in a relatively small reaction zone C.

With clockwise rotation, the reaction zone C is believed to decrease in size radially outwardly, compared to counterclockwise rotation, that is, the size of the gas zone B increases. In a preferred embodiment, the agitator 40 is rotated counterclockwise, in view of the particular blade pitch and the view of Figures 3 and 4, in such a manner as to retard the bulk flow of liquid through the mixing chamber. It is believed that counterclockwise rotation results in a larger reaction zone C. With counterclockwise rotation, the reaction zone C is believed to increase radially inwardly, that is, the size of the gas zone B decreases.

The drive is preferably a variable speed drive that can be operated to rotate the agitator slowly or quickly.

Slow rotation of the agitator is believed to increase the size of the reaction zone C and increases the residence time of the liquid material in the mixing chamber. Fast rotation of the agitator is believed to result in a smaller reaction zone C and decreases the residence time of the liquid material in the mixing chamber. Those skilled in the art will appreciate in view of this disclosure that the relative values of "fast" or "slow" rotational speed of the agitator and the effect these values and rotational direction have on liquid residence time in the reaction zone, can be empirically determined for each primary/secondary fluid system.

In operation, first fluid material, for example a milk of lime suspension to be carbonated, is directed through the inlet 18 at a certain flow rate into the mixing chamber 16. Second fluid material, for example, carbon dioxide containing gas, is directed along headers 52, through ports 54, and subsequently through the inserts 62 into the mixing chamber. The agitator 30 rotates at a particular speed and direction depending upon the desired residence time of fluid material in the reactor mixer.

The residence time is also adjusted by selecting the size of the annular space G in view of the inside diameter of the mixing chamber and heights of each of the blades and axial baffles. Fluid flow is disrupted generally circumferentially in the mixing chamber by the axial baffles 24. Fluid flow is disrupted in a general direction of the axis by the circumferential baffles 26.

The mixed fluid (e.g., carbonated milk of lime) leaves the mixing chamber through the outlet 20.

The operating parameters of the system vary according to the dimensions and end use of the system, as well as many other factors. For purposes of illustration only, the mixing system can process from 0 to 5 liters per minute of a milk of lime suspension converting the milk of lime suspension to precipitated calcium carbonate suspension. The mixing chamber is capable of containing pressures up to 30 bar gauge. The blade speed depends upon the geometry of the agitator and the degree of mixing required.

Many modifications and variations of the process according to the invention will be apparent to those of ordinary skill in the art in light of the foregoing disclosure. Therefore, it is to be understood that, within the scope of the appended claims, the process according to the invention can be practiced otherwise than has been specifically shown and described.

The precipitated solid compound obtained in the process according to the invention can be substantially amorphous or substantially crystalline. Substantially amorphous or crystalline is understood to mean that more than 50 % by weight, especially more than 75 % by weight, more particularly more than 90% by weight of the solid compound is in the form of amorphous or crystalline material when analyzed by an X-ray diffraction technique. When the precipitated solid compound is calcium carbonate, substantially crystalline calcium carbonate is preferred. Crystalline calcium carbonate can consist of calcite or aragonite or a mixture of these two crystalline phases.

The primary particles of the precipitated compound obtained in the process according to the invention can be of any shape. When the precipitated solid compound is calcium carbonate, those primary particles may have the form of needles, scalenohedrons, rhombohedrons, spheres, platelets or prisms. The primary particles are defined as the smallest individual crystallites. The shape of the primary particles can be obtained from Electron Microscopy Analysis.

The crystallographic structure of the PCC has been obtained from SEM pictures visual analysis. The aragonite crystallographic phase is related to the presence of needle like particles while the calcite phase is related to the presence rhomboedral like particles, as well known by the man skilled in the art.

The precipitated solid compound particles obtained in the process according to the invention have usually a BET specific surface area higher than or equal to 1 m²/g, preferably higher than or equal to 5 m²/g, more preferably higher than or equal to 10 m²/g, still more preferably higher than or equal to 20 m²/g and in particular higher than or equal to 25 m²/g. The particles according to the invention have generally a BET specific surface area lower than or equal to 300 m²/g preferably lower than or equal to 250 m²/g, more preferably lower than or equal to 200 m²/g, still more preferably lower than or equal to 150 m²/g and in particular lower than or equal to 100 m²/g. The BET specific surface area is measured according to the standard ISO 9277-1995.

The precipitated solid compound particles obtained in the process according to the invention have usually a mean primary particle size (dp) higher than or equal to 5 nm, preferably higher than or equal to 10 nm, more preferably higher than or equal to 30 nm, still more preferably higher than or equal to 50 nm and most preferably higher than or equal to 70 nm. The mean primary particle size is generally lower than or equal to 20 µm, preferably lower than or equal to 10 µm, more preferably lower than or equal to 1 µm and most preferably lower than or equal to 0.5 µm. The mean primary particle size is measured according to the standard NFX 11 601-1974/NFX-11 602-1977.

The precipitated solid compound elementary particles obtained in the process according to the invention can be aggregated. The mean size of the aggregated particles (approximately equal to the value of D₅₀ defined below) is higher than or equal to 0.030 µm, preferably higher than or equal to 0.050 µm, more preferably higher than or equal to 0.070 µm, still more preferably higher than or equal to 0.100 µm and most preferably higher than or equal to 0.150 µm. The mean aggregate size is generally lower than or equal to 20 µm, preferably lower than or equal to 10 µm, more preferably lower than or equal to 5 µm, still more preferably lower than or equal to 3 µm and most preferably lower than or equal to 1 µm. D₅₀ is the particle size value less than which there are 50 % by weight of the particles. The D₅₀ can for instance be obtained from well known standard methods employed in the art of sedimentation of the particles in a fully dispersed state in an aqueous medium using a SEDIGRAPH 5100 machine as supplied by Micromeritics Corporation, USA or a CAPA 700 machine as supplied by Horiba, JP.

In the process according to the invention, when the precipitated solid compound is calcium carbonate, the particle size distribution measured directly on the suspension is most of the time quite similar to the particle size distribution obtained by resuspending the same PCC after drying and grinding. This is unexpected since for PCC obtained from classical batch carbonation, the particle size distribution of a resuspended PCC is generally shifted towards lower values of particle size compared to the as-synthesized PCC suspension.

The precipitated solid compound particles obtained in the process according to the invention can be coated with at least one coating agent. The coating agent can be selected from carboxylic acids, carboxylic acid salts, polyacrylic acids, polyacrylic acid salts, sulfonic acids, sulfonic acid salts, sulfosuccinate, phosphonic acids, phosphonic acid salts and mixtures thereof. The coating agent may be present in first fluid material before precipitation or added at the end of the precipitation or added to the precipitated solid compound later on.

The carboxylic acid may be aliphatic or aromatic. Aliphatic carboxylic acids are preferred.

The aliphatic carboxylic acid may be any linear or branched or cyclic, substituted or non substituted, saturated or unsaturated, aliphatic carboxylic acid. The aliphatic carboxylic acid has usually a number of carbon atoms greater than or equal to 4, preferably greater than or equal to 8, more preferably greater than or equal to 10 and most preferably greater than or equal to 14. The aliphatic carboxylic acid has generally a number of carbon atoms lower than or equal to 32, preferably lower than or equal to 28, more preferably lower than or equal to 24 and most preferably lower than or equal to 22.

The aliphatic carboxylic acid can be selected from the group of substituted, non substituted, saturated and unsaturated fatty acids or mixtures thereof. More preferably it is selected from the group consisting of caproic acid, caprylic acid, capric acid, lauric acid, myristic acid, palmitic acid, stearic acid, iso-stearic acid, hydroxystearic acid, arachidic acid, behenic acid, lignoceric acid, cerotic acid, montanic acid, melissic acid, myristoleic acid, palmitoleic acid, petroselinic acid, petroselaidic acid, oleic acid, elaidic acid, linoleic acid, linolelaidic acid, linolenic acid, linolenelaidic acid, a-eleostaeric acid, b-eleostearic acid, gadoleic acid, arachidonic acid, erucic acid, brassidic acid and clupanodonic acid, mixtures thereof or salts derived therefrom. Mixtures containing mainly palmitic, stearic and oleic acids are more preferred. Mixtures called "stearine" which consist of about 30 ― 40 wt% stearic acid, of about 40 -50 wt% palmitic acid and of about 13 - 20 wt% oleic acid are particularly preferred.

The aliphatic carboxylic acid can be a rosin acid selected from the group consisting of levopimaric acid, neoabietic acid, palustric acid, abietic acid, dehydroabietic acid, mixtures thereof or salts derived therefrom.

When the precipitated compound is calcium carbonate and in case that the coating agent is a salt of an aliphatic carboxylic acid, this may be the calcium salt of the carboxylic acid. However, the coating agent may also be present e.g. in form of the sodium, potassium or ammonium salt of the aliphatic carboxylic acid.

The coating agent may be applied to the particles by any suitable method. For instance, the coating agent can be dispersed or emulsified in liquid or solid form. In the case where the precipitated solid compound is calcium carbonate, the coating agent preferably used as an emulsion with the dispersed calcium carbonate, for example, during the grinding process or during and/or after the precipitation, the coating agent adhering to the surface of the calcium carbonate.

Preferably, the treatment of the calcium carbonate with the coating agent takes place in emulsified form in an aqueous system.

The precipitated solid compound particles can be coated with a polyacrylic acid, a polyacrylic acid salt or with a mixture thereof. The molecular weight of the polyacrylic acid is generally higher than or equal to 500 g/mol, preferably higher than or equal to 700 g/mol and most preferably higher than or equal to 1 000 g/mol. That molecular weight is usually lower than or equal to 15 000 g/mol, ideally lower than or equal to 4 000 g/mol and in particular lower than or equal to 2 000 g/mol.

In case that the precipitated compound is calcium carbonate and the coating agent is a salt of a polyacrylic acid, this may be the calcium salt of the polyacrylic acid. However, the coating agent may also be present e.g. in form of the sodium, potassium or ammonium salt of the polyacrylic acid. The sodium salt is preferred.

Preferably, the precipitated solid compound particles used in the invention are coated with a coating the content of which being usually higher than or equal to 0.0001 wt%, preferably higher than or equal to 0.001 wt%, yet preferably higher than or equal to 0.01 wt% and most preferably higher than or equal to 0.05 wt%, based on the total weight of the particles. The coating content of the particles according to the invention is generally lower than or equal to 60 wt%, preferably lower than or equal to 25 wt%, yet preferably lower than or equal to 10 wt% and most preferably lower than or equal to 6 wt%, based on the total weight of the particles.

The suspension of the precipitated solid compound in the mixed fluid and the precipitated solid compound obtained by the process according to the invention can be used as additive in paper, polymers, rubbers, inks, food, pharmaceuticals, paints, plastisols and sealants.

The following examples further illustrate the invention but are not to be construed as limiting its scope.

### Example 1

A reactor such as described in Figure 2 but having one inlet for introducing the milk of lime and one inlet for introducing the carbon dioxide containing gas has been connected to a liquid-gas separator and has been fed with a gas stream from a lime kiln containing 28 % vol of carbon dioxide at a pressure of 2 bar (absolute) and at a flow rate of 18 Nm³/h. The agitator has been rotated clockwise at a speed of 3 200 rpm. Then a milk of lime containing 50 g of calcium hydroxide per L of milk of lime at a temperature of 15 °C was introduced in the reactor at a flow rate of 1-1.5 L/min. The pH of the PCC suspension in the gas/liquid separator was 6.9 and its temperature was 60 °C. A fraction of the suspension has been sampled for measuring the particle size distribution curve by sedigraphy. Another fraction has been filtered under vacuum and the resulting cake has been dried at 140 °C for 16 h in an oven.

### Example 2

The same conditions have been used as in example 1, except that the gas pressure was set to 4-8 bar, the gas flow rate was set to 14-18 Nm³/h and the milk of lime suspension flow rate was 2.0-2.5 L/min.

### Example 3

The same conditions have been used as in example 2, except that the gas pressure was set to 5 bar, the gas flow rate was set to 14-17 Nm³/h and the milk of lime suspension flow rate was 2.5 L/min.

### Example 4

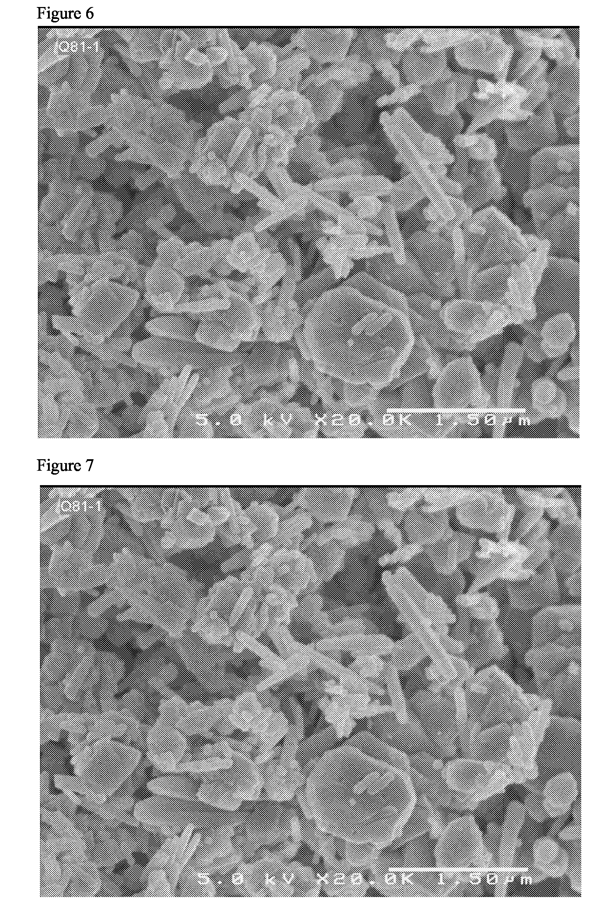

The same conditions have been used as in example 1, except that the gas pressure was 5 bar, the gas flow rate was 5.6 Nm³/h, the CO₂ content of the gas was 100 % vol and the milk of lime flow rate was 3.7 L/min. A picture obtained from Scanning Electron Microscopy is presented at Figure 6.

### Examples 5

The same conditions have been used as in example 3, except that the milk of lime had a calcium hydroxide content of 5 g/L and the milk of lime flow rate was 3.7 L/min.

### Examples 6 to 7

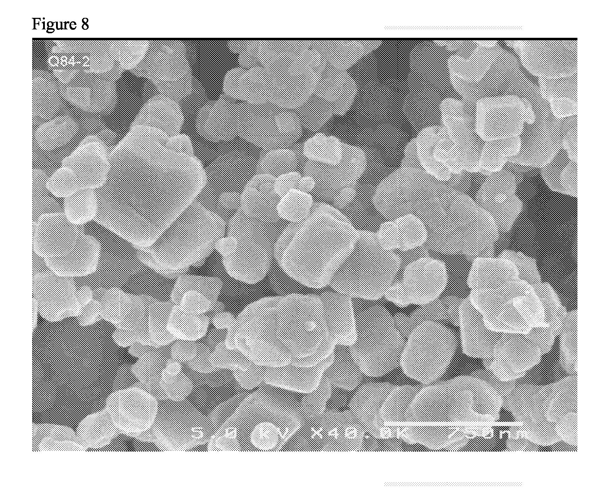

The same conditions as in example 4 have been used except that the milk of lime has a concentration of 100 and 140 g of calcium hydroxide per L and a flow rate of respectively, 2.6 and 0.6 L/min. Pictures obtained from Scanning Electron Microscopy are presented respectively at Figures 7 and 8.

### Examples 8 to 10

The same conditions as in example 3 have been used excepted that the gas pressure has been set to 5 bar and that the multi-bladed agitator has been rotated at speeds of respectively 2 700, 3 200 and 3 750 rpm.

### Example 11

The same conditions as in example 1 have been used excepted that the agitator has been rotated counter clock wise and that the milk of lime flow rate was set to 3 L/min.

### Examples 12 to 14

The same conditions as in example 3 have been used excepted that the temperature of the milk of lime was respectively of 16, 42 and 78 °C and the milk of lime flow rate was respectively set at 2.6, 1.6 and 2.3 L/min.

### Examples 15 to 24

The same conditions as in example 3 have been used excepted that the following additives have respectively been added to the milk of lime before carbonation : citric acid (8.2 wt % vs PCC), sodium polyacrylate (molecular weight of 1 200 g/mol, 4.8 wt % vs PCC), KH₂PO₄ (3 wt % vs PCC), sodium 2-ethylhexyl sulfosuccinate (11 wt % vs PCC of a solution of sodium 2-ethylhexyl sulfosuccinate at 75 weight % in a hydroalcoholic mixture), ammonium hydroxide (0.25 %, 0.50 %, and 1.0 % vol vs milk of lime of an aqueous solution at 20 weight %), ammonium chloride (3 g/L of milk of lime) and laponite (1 wt % vs PCC).

### Measurement methods

The mean primary particle size has been measured according to the method described in standard NFX 11-601-1974 and NFX 11-602-1977 on the PCC samples filtered and dried for 16 h at 140 °C.

The particle size distribution curve has been obtained using a SediGraph 5100 V3.07A instrument. The measurement has been carried out on a suspension containing 2.5 g of PCC in 50 mL of water which has been prepared by mixing adequate amounts of the PCC suspension obtained after carbonation and water. The suspension has been submitted for 3 min to an ultra-sound treatment (50 W, 20 000 Hz). The measurement has been performed at 34 °C.

The BET specific surface area (SSA) has been carried out according to standard ISO 9277-1995. The filtered and dried PCC samples have been ground in a ALPINE 160Z type grinder which speed has been set using a frequency transducer ((50 Hz corresponding to 20 300 rpm). The samples have been degassed for at least 12 h at 105 °C under vacuum, before analysis.

The crystallographic structure of the PCC has been obtained from SEM pictures visual analysis. The aragonite crystallographic phase is related to the presence of needle like particles while the calcite phase is related to the presence rhomboedral like particles, as well known by the man skilled in the art.

The crystal habit of the PCC has been obtained by analysis of pictures obtained with Scanning Electron Microscopy.

The pH of the suspension containing calcium carbonate (II) has been measured with a classical pH electrode and instrument.

The characteristics of the PCC obtained in examples 1 to 24 are summarized in Table 1.

**Table 1**

| Example | Precipitated Calcium carbonate | | | | | |
|---|---|---|---|---|---|---|
| | yield | dp | D50 | SSA | Crystallographic | Crystal |
| | (%) | (nm) | (µm) | (m²/g) | phase | habit |
| 1 | 98 | 70-90 | 0.5-1.5 | 13 | Calcite | Rhomboeders |
| 2 | 98 | 130-300 | 0.9-2.5 | 3-9 | Calcite | Rhomboeders |
| 3 | 98 | 277 | 2,1 | n.m. | Calcite | Rhomboeders |
| 4 | 95 | 205 | 1,8 | 9,8 | Calcite+aragonite | Rhomboeders+Needles |
| 5 | 100 | 89 | 1,1 | 18 | Calcite | Rhomboeders |
| 6 | 95 | 190 | 1,3 | n.m. | Calcite+aragonite | Rhomboeders+Needles |
| 7 | 97 | 178 | 2,1 | n.m. | Calcite | Rhomboeders+Needles |
| 8 | 99 | 250 | 1,8 | n.m. | Calcite | Rhomboeders |
| 9 | 98 | 280 | 2,2 | n.m. | Calcite | Rhomboeders |
| 10 | 99 | 220 | 1,5 | n.m. | Calcite | Rhomboeders |
| 11 | ? | 600-900 | 4.5-10 | n.m. | Calcite | Rhomboeders/"sea ursin" |
| 12 | 98 | 300 | 2,2 | n.m. | Calcite | Rhomboeders |
| 13 | 98 | 208 | 1,3 | n.m. | Calcite | Rhomboeders |
| 14 | 96 | 150 | 0,8 | n.m. | Calcite | Rhomboeders |
| 15 | 78 | 99 | 1,7 | 25 | Calcite | irregular spindle shaped agregates |
| 16 | 90 | 203 | 2,7 | 16 | Calcite | irregular spindle shaped agregates |
| 17 | 91 | 263 | 2,6 | 16 | Calcite | irregular R |
| 18 | 98 | 217 | 2 | 6 | Calcite | Rhomboeders |
| 19 | 98 | 275 | 2 | n.m. | Calcite | Rhomboeders |
| 20 | 100 | 275 | 1,6 | n.m. | Calcite | Rhomboeders |
| 21 | 100 | 170 | 1,25 | n.m. | Calcite | Rhomboeders |
| 22 | 100 | 130 | 1 | 9,3 | Calcite | Rhomboeders |
| 23 | 95 | 145 | 1,3 | 9,6 | Calcite | Rhomboeders |
| 24 | 99 | 362 | 2,1 | 6,4 | Calcite | Rhomboeders |
| n.m. : not measured | | | | | | |

## Claims

1. Process for making a solid compound by precipitation, using a reactor comprised of a tank defining a mixing chamber having an inner wall which is generally symmetrical about a central axis, of an agitator comprising a cylindrical central portion extending in said mixing chamber along said axis and at least one blade having a twisted orientation on said central portion, of a series of first baffles extending along the inner wall generally parallel to said axis and of a series of second baffles extending along the inner wall generally transverse to said axis; and comprising the steps of
(A) introducing a first fluid material containing a first reactant and a second fluid material containing a second reactant into said reactor in order to obtain a mixed fluid, rotating the agitator, disrupting the mixed fluid flow generally circumferentially in said mixing chamber with first baffles and disrupting the mixed fluid flow generally axially in said mixing chamber with second baffles, in order to cause the first reactant to react with the second reactant to form a solid compound by precipitation in the mixed fluid;
(B) withdrawing the mixed fluid containing the precipitated solid obtained in step (A) from the reactor, and;
(C) optionally separating the precipitated solid compound from at least one fraction of the mixed fluid.

2. Process according to claim 1, wherein the temperature of each fluid material, before introduction in said reactor, is higher than or equal to -50 °C and lower than or equal to 100 °C and, the reactant content of each fluid material before introduction in said reactor, is higher than or equal to 1 g per L of fluid material and lower than or equal to 300 g per L.

3. Process according to any of claims 1 to 2, wherein each fluid material contains at least one additive different from the reactant.

4. Process according to any of claims 1 to 3, wherein the first fluid material is a one phase liquid or a two-phase solid-liquid mixture and the residence time of the first fluid material in the mixing reactor is higher than or equal to 0.001 s and lower than or equal to 10 s.

5. Process according to any of claims 1 to 4, wherein the second fluid material is a gaseous mixture, the pressure of the gaseous mixture before introduction in said reactor, is higher than or equal to 1 bar absolute and lower than or equal to 50 bar absolute and the second reactant content of the gaseous mixture before introduction in said reactor, is higher than or equal to 1 % vol and lower than or equal to 100 % vol.

6. Process according to any of claims 1 to 5, wherein the speed of rotation of the agitator is higher than or equal to 200 rpm and lower than or equal to 5 000 rpm and the way of rotation of the agitator is clockwise.

7. Process according to any of claims 1 to 6, wherein the solid compound obtained by precipitation is calcium carbonate, the first fluid material is an aqueous suspension of calcium hydroxide, the aqueous suspension of calcium hydroxide contains at least one additive selected from citric acid, ethylene diamine tetraacetic acid, sodium polyacrylate, potassium hydrogenophosphate, sodium sulfosuccinate, ammonium chloride, ammonium hydroxide, barium, lithium and magnesium hydroxides and carbonates, copolymers based on ethylene oxide and propylene oxide and laponite, and the second fluid material is a carbon dioxide containing gas.

8. Suspension of a precipitated solid compound in a mixed fluid, obtained by the process according to any of claims 1 to 7.

9. Precipitated solid compound obtained by the process according to any of claims 1 to 7.

10. Use of the suspension according to claim 8 and of the solid according to claim 9, as additive in paper, polymer, rubber, ink, food, pharmaceuticals, paints, plastisols and sealants.
